# EUROPÄISCHE PATENTSCHRIFT

(11) **EP 2 924 195 B1**
(45) Veröffentlichungstag und Bekanntmachung des Hinweises auf die Patenterteilung: **22.05.2019**
(21) Anmeldenummer: 15160643.1
(22) Anmeldetag: 24.03.2015
(51) Int. Cl.: E05B 1/00, E05B 3/06

(54) **ANSCHLAGKÖRPER FÜR TÜR- UND/ODER FENSTERGRIFFE UND GRIFFANORDNUNG MIT EINEM ANSCHLAGKÖRPER**
END STOP BODY FOR DOOR AND/OR WINDOW HANDLES AND HANDLE ASSEMBLY WITH AN END STOP BODY
CORPS DE BUTÉE POUR POIGNÉE DE FENÊTRE ET/OU DE PORTE ET SYSTÈME DE POIGNÉE DOTÉ D'UN CORPS DE BUTÉE

(30) Priorität: 25.03.2014 DE 102014104119
(43) Veröffentlichungstag der Anmeldung: 30.09.2015
(73) Patentinhaber: Hoppe AG, 39011 Lana (BZ) (IT)
(72) Erfinder: Karnutsch, Elias, 6543 Nauders (AT); Schuberth, Oliver, 39023 Laas (IT)
(74) Vertreter: Patentanwälte Olbricht Buchhold Keulertz

(56) Entgegenhaltungen:
- EP-B1- 1 514 984
- WO-A1-00/23677
- DE-A1- 2 208 617
- DE-A1- 2 752 213
- DE-U1- 29 818 559

## Beschreibung

Die Erfindung betrifft einen Anschlagkörper für Tür- und/oder Fenstergriffe gemäß dem Oberbegriff von Anspruch 1 sowie eine Griffanordnung mit einem Anschlagkörper nach Anspruch 15. Griffe für Türen und/oder Fenster sind gewöhnlich axialfest-drehbar in einem Anschlagkörper gelagert und mit diesem an einem Türblatt der Tür oder einem Rahmenprofil des Fensters befestigt. Griff und Anschlagkörper bilden eine Griffanordnung, wobei der Anschlagkörper einen Grundkörper aufweist, der mit einer Öffnung zur drehbaren Aufnahme des Griffs sowie mit wenigstens zwei Durchgangslöchern für die Aufnahme von Schrauben versehen ist. Die Schrauben werden im Türblatt oder im Rahmenprofil festgelegt. Damit die Schrauben nach dem Montieren des Grundkörpers an der Tür oder am Fenster nicht sichtbar sind, wird ein Abdeckelement verwendet, das gewöhnlich drehbar um die zentrische Öffnung des Grundkörpers gelagert ist. Für die Montage des Griffs bzw. des Grundkörpers an der Tür oder am Fenster wird das Abdeckelement gegenüber dem Grundkörper zunächst verschwenkt, so dass die Durchgangslöcher für die Schrauben zugänglich sind. Nach der Montage und dem Zurückschwenken des Abdeckelements sind die Schrauben verdeckt, wobei das Abdeckelement randseitig meist bündig mit dem Grundkörper abschließt. Soll die Griffanordnung demontiert werden, wird das Abdeckelement erneut verschwenkt, so dass die Schrauben wieder zugänglich sind.

Das Dokument DE 27 52 213 A1 beschreibt einen Anschlagkörper gemäß dem Oberbegriff des Anspruchs 1.

Bei einem aus DE 22 08 617 A1 bekannten Beschlag für Türen und Fenster sitzt das Abdeckelement als Abdeckplatte schwenkbar gelagert auf einem Grundteil, das einen Durchbruch für den Griff sowie Löcher für zwei Befestigungsschrauben aufweist. Zwischen der Abdeckplatte und dem Griff ist eine Scheibe aus reibungsarmem Material angeordnet. Zum Festlegen der Abdeckplatte in einer das Grundteil abdeckenden Wirkstellung ist die Abdeckplatte an ihrem äußeren Rand mit einer umlaufenden Rippe versehen, die in Wirkstellung der Abdeckplatte in eine entsprechende randseitige Aussparung im Grundteil eingreift. Auf der Rückseite des Grundteils ist eine Aussparung für das Einsetzen eines Federrings und eines Befestigungsrings vorgesehen, wobei der Federring dafür sorgt, dass die Abdeckkappe sich nicht versehentlich aus ihrer Wirkstellung verdrehen kann und dass die Abdeckkappe zum Verschwenken gegenüber dem Grundteil etwas angehoben werden kann. Problematisch hierbei ist, dass mit der Abdeckplatte auch die Scheibe und der Griff angehoben werden müssen, was nicht nur umständlich ist, sondern auch zu Beschädigungen an der Abdeckplatte führen kann.

DE 39 35 074 offenbart eine Betätigungseinheit für einen Fenster- oder Türverschluss, mit einem Rosetten-Grundkörper und einer sichtseitig auf dem Grundkörper angebrachten Abdeckplatte, wobei zur Fixierung der Abdeckplatte am Grundkörper zwischen dem in dem Grundkörper drehbar gelagerten Griff und der Abdeckplatte ein Federelement angeordnet ist. Damit dieses nicht verloren geht und um die Montage zu vereinfachen, ist das Federelement einteilig mit der Abdeckplatte oder dem Rosetten-Grundkörper ausgebildet. Aufgrund des Federelements ist es möglich, die Abdeckplatte bei der Montage der Betätigungseinheit an einem Fenster oder einer Tür vom Grundkörper abzuheben und zu verschwenken. Damit muss auch hier die Abdeckplatte vor dem Verschwenken umständlich angehoben werden, was nur möglich ist, wenn zwischen dem Griff und der Abdeckplatte ein ausreichend großer Freiraum vorhanden ist.

EP 1 514 984 B1 sieht eine Griffanordnung mit einer länglichen Rosette vor. Diese hat einen Anschlagkörper mit Befestigungsnocken und einer Lagerbuchse für den Griff sowie eine den Anschlagkörper und die Lagerbuchse übergreifende, schwenkbare Abdeckplatte oder -kappe. Letztere ist biegeelastisch ausgebildet und durch axiale Verrastung an der Lagerbuchse auf dem Anschlagkörper gehalten. Die Abdeckplatte oder -kappe ist ferner an den Enden des Anschlagkörpers durch Verschwenken ein- und ausrastbar, wobei die Enden der Abdeckplatte oder -kappe beim Verschwenken an Rampen des Anschlagkörpers aufgleitbar sind. Damit muss die Abdeckplatte oder -kappe zwar nicht mehr gegenüber dem Anschlagkörper angehoben werden. Sie muss jedoch aus einem ausreichend biegeelastischen Material bestehen, was auf Dauer zu Problemen führen kann.

Die bekannten Anschlagkörper haben ferner den Nachteil, dass für das Andrücken und Festlegen der Abdeckplatte oder -kappe auf dem Grundkörper stets eine Feder oder Rastelemente vorhanden sein müssen, was nicht nur eine aufwendigen Konstruktion zur Folge hat, sondern auch dazu führt, dass ein relativ großer Freiraum bzw. Abstand zwischen Griff und Abdeckelement vorhanden sein muss, um entweder das Abdeckelement festlegen zu können oder um dieses zum Verschwenken gegenüber dem Grundkörper anheben zu können. Darüber hinaus sitzt der Grundkörper stets auf dem Türblatt oder dem Rahmenprofil des Fensters auf. Er ist mithin sichtbar, was modernen ästhetischen Anforderungen oft nicht gerecht wird, insbesondere dann wenn der Grundkörper und das Abdeckelement aus unterschiedlichen Materialien gefertigt sind.

Abdeckelemente, welche den Grundkörper oder den Rosettenkörper der Griffanordnung auch in den seitlichen Bereichen verdecken, sind meist als Abdeckkappen ausgebildet (siehe dazu beispielsweise DE 298 06 679 U1). Eine solche Abdeckkappe kann jedoch nicht verschwenkt werden. Sie muss - um an die Schrauben zu gelangen - vollständig von dem Grundkörper bzw. dem Rosettenkörper abgehoben und über den Griff, namentlich über dessen Griffhals, geschoben werden. Hierzu besitzt die Abdeckkappe eine zentrische Öffnung, deren Durchmesser größer ist als der Außendurchmesser des Griffhalses. Problematisch hierbei ist, dass die Handhabung äußerst umständlich ist, denn auch eine angehobene Abdeckkappe ist beim An- oder Abschrauben des Grundkörpers meist noch im Weg. Ferner entstehen rasch Kratzspuren auf den Griffen, wenn die Abdeckkappe angehoben wird. Die Öffnung in der Abdeckkappe verhindert auch hier, dass Bauteile der Unterkonstruktion vollständig verdeckt sind, was mithin ästhetischen Anforderungen nicht gerecht wird.

Ziel der Erfindung ist es, diese und weitere Nachteile des Standes der Technik zu überwinden und einen Anschlagkörper für einen Tür- und/oder Fenstergriff zu entwickeln, der mit einfachen Mitteln kostengünstig aufgebaut ist und bei deutlich verringerter Bauhöhe des Anschlagkörpers ein optisch einheitliches und geschlossenes Erscheinungsbild gewährleistet. Der Anschlagkörper soll ferner einfach zu handhaben sein und auch höheren Belastungen dauerhaft standhalten.

Hauptmerkmale der Erfindung sind im kennzeichnenden Teil von Anspruch 1 und in Anspruch 15 angegeben. Ausgestaltungen sind Gegenstand der Ansprüche 2 bis 14. Bei einem Anschlagkörper für Tür- und/oder Fenstergriffe, mit einem Grundkörper, der eine zentrisch angeordnete Ausnehmung und zur Aufnahme von Befestigungsschrauben wenigstens zwei Durchgangslöcher aufweist, wobei der Grundkörper eine Oberseite und eine Unterseite aufweist, und mit einem Abdeckelement, das drehbar auf der Oberseite des Grundkörpers angeordnet ist und in einer ersten Drehstellung relativ zum Grundkörper diesen abdeckt und in einer zweiten Drehstellung relativ zum Grundkörper die Durchgangslöcher freigibt, sieht die Erfindung vor, dass auf der Unterseite des Grundkörpers ein Abdeck-Unterteil angeordnet ist, wobei das Abdeckelement und das Abdeck-Unterteil in der ersten Drehstellung des Abdeckelements den Grundkörper umschließen.

Damit ergibt sich bei einer nur geringen Bauhöhe des Anschlagkörpers ein stets optisch einheitliches und geschlossenes Erscheinungsbild, denn das Abdeckelement und das Abdeck-Unterteil schließen den Grundkörper, mit dem der Griff an einer Tür oder einem Fenster befestigt wird, wie ein Gehäuse in sich ein, so dass der Grundkörper von außen nicht weiter sichtbar ist. Zur Montage oder Demontage des Grundkörpers kann jedoch das Abdeckelement jederzeit in die zweite Drehstellung relativ zum Grundkörper gedreht werden, so dass die Durchgangslöcher im Grundkörper und - soweit vorhanden - die Befestigungsschrauben zugänglich sind. Dabei muss das Abdeckelement weder gegenüber dem Grundkörper noch gegenüber dem Griff angehoben werden, denn das Abdeckelement bewegt sich stets in einer Ebene, namentlich in der Ebene des Abdeck-Unterteils, das unbeweglich unter dem Grundkörper angeordnet ist. Folglich kann der Abstand zwischen dem Griff und dem Abdeckelement auf ein Minimum reduziert werden kann, denn zwischen dem Griff und dem Grundkörper sind auch keine Feder- oder Rastelemente mehr notwendig, die das Abdeckelement auf dem Grundkörper halten. Der erfindungsgemäße Anschlagkörper ist einfach und kostengünstig aufgebaut und lässt sich einfach handhaben.

Die Erfindung sieht weiter vor, dass das Abdeckelement einen den Grundkörper seitlich abdeckenden Rand aufweist, der in einander gegenüberliegenden Bereichen unterbrochen ist. Das Abdeck-Unterteil hat gleichfalls einen den Grundkörper seitlich abdeckenden Rand, der in einander gegenüberliegenden Bereichen unterbrochen ist. Beide Ränder sind hierbei derart ausgebildet, dass sich der Rand des Abdeckelements und der Rand des Abdeck-Unterteils in der ersten Drehstellung des Abdeckelements relativ zum Grundkörper zu einem optisch geschlossenen Rand ergänzen. Der Grundkörper wird mithin, sobald das Abdeckelement seine erste Drehstellung erreicht hat, von dem Abdeckelement und dem Abdeck-Unterteil nicht nur auf der Ober- und Unterseite abgedeckt, sondern mittels der Ränder auch seitlich, d.h. der Grundkörper ist von außen nicht sichtbar. Durch entsprechende Gestaltung von Abdeckelement und Abdeck-Unterteil, deren Material unabhängig vom Grundkörper gewählt werden kann, lassen sich höchste ästhetische Ansprüche erfüllen.

Die Ränder von Abdeckelement und Abdeck-Unterteil sind komplementär ausgebildet, d.h. der Rand des Abdeckelements liegt in geschlossener Stellung des Abdeckelements in den einander gegenüberliegenden Bereichen zwischen dem Rand des Abdeck-Unterteils und umgekehrt. Beide Ränder ergänzen sich damit zu einem optisch in sich geschlossenen Rand, sobald das Abdeckelement auf dem Unterteil seine erste geschlossene Drehstellung eingenommen hat, wobei sich das Abdeckelement und das Abdeck-Unterteil stets auf gleicher Höhe befinden. Die Höhe des Randes ist von der Höhe des Grundkörpers abhängig, insbesondere an dessen Höhe angepasst, so dass der Grundkörper stets vollständig - auch seitlich - von dem weiterhin schwenkbaren Abdeckelement und dem Abdeck-Unterteil umgeben ist.

Um das Abdeckelement drehbar lagern zu können, weist das Abdeckelement konzentrisch zur Ausnehmung des Grundkörpers eine Öffnung auf. Das Abdeck-Unterteil weist einen Boden auf, in dem konzentrisch zur Ausnehmung des Grundkörpers eine Öffnung ausgebildet ist. Zudem sind im Boden des Abdeck-Unterteils im Bereich der Durchgangslöcher des Grundkörpers weitere Durchgangslöcher ausgebildet. Diese dienen gleichfalls der Durchführung der Befestigungsschrauben, die zur Festlegung des Grundkörpers im Türblatt oder im Rahmenprofil des Fensters festgelegt werden.

Damit das Abdeckelement stets sicher in der ersten Drehstellung verbleibt und sich auch nicht während der Betätigung des Griffs versehentlich verdreht, stehen das Abdeckelement und das Abdeck-Unterteil in der ersten Drehstellung des Abdeckelements kraft-, reib- und/oder formschlüssig miteinander in Verbindung. Diese Verbindung kann beispielsweise durch Rastelemente geschaffen werden, die einerseits am Abdeckelement und andererseits am Abdeck-Unterteil ausgebildet sind. Oder man verwendet geeignete Klemm- oder Reibelemente, die das Abdeckelement an dem Abdeck-Unterteil lösbar festlegen.

Eine weitere vorteilhafte Ausführungsform der Erfindung sieht vor, dass das Abdeckelement mittels eines Flanschrings drehbar auf dem Grundkörper gesichert ist. Dieser hat bevorzugt einen Ringabschnitt, der die konzentrisch zur Ausnehmung des Grundkörpers liegende Öffnung im Abdeckelement durchragt und mittels Passelementen verdrehsicher mit dem Grundkörper in Verbindung oder in Eingriff steht. Auf diese Weise kann sich der Flanschring nicht drehen und das Abdeckelement ungehindert seitlich verschwenkt werden.

Der Flanschring hat ferner einen Flanschrand, der im Bereich der Öffnung im Abdeckelement auf dessen Oberseite aufliegt. Dadurch wird das Abdeckelement axial auf dem Grundkörper gesichert. Zugleich bildet der Flanschrand ein Widerlager für den Griff. Hierzu ist es wichtig, dass der Flanschrand des Flanschrings eine ebene Stirnfläche hat, wobei die Stirnfläche eine Lagerfläche für den Griff bildet. Wird ein solcher Griff, in den gewöhnlich stirnseitig ein Mitnehmer eingesetzt ist, der mit einem Betätigungselement im Türblatt oder im Rahmenprofil in Wirkverbindung steht, auf dem Anschlagkörper axial fixiert, kann der Griffhals des Griffs bündig mit seiner Stirnfläche auf dem Flanschrand des Flanschrings aufliegen, so dass der Griff dauerhaft stabil und präzise auf dem Anschlagkörper gelagert ist. Die axiale Fixierung des Griffs erfolgt beispielsweise mittels einer oder zwei Klemmscheiben, die kraft- und/oder reibschlüssig auf den Mitnehmer aufgesetzt werden und die sich von unten gegen die Unterseite des Grundkörpers des Anschlagkörpers abstützen.

Die Verdrehsicherung des Flanschrings gegenüber dem Grundkörper erfolgt beispielsweise durch komplementäre Eingriffselemente bzw. Passelemente, die korrespondierend am Flanschring und am Grundkörper ausgebildet sind.

Gemäß einer weiteren Ausführungsform der Erfindung ist in den Grundkörper ein Rastring eingesetzt, der beispielsweise mittels Passelementen verdrehsicher im Grundkörper gehalten ist. Ein solcher Rastring kann dazu verwendet werden, den Griff in ausgezeichneten Drehstellungen relativ zum Anschlagkörper bzw. zum Grundkörper festzulegen, so dass zum Weiterdrehen des Griffs ein bestimmtes Drehmoment überwunden werden muss. Hierzu ist beispielsweise im Griff ein federgelagerter Gegenrastring axialverschieblich ausgebildet, der in den ausgezeichneten Drehstellungen des Griffs kraft- und formschlüssig mit dem Rastring in Eingriff steht. In dem Rastring und dem Gegenrastring sind in axialer Richtung entsprechende Rastelemente und Gegenrastelemente ausgebildet, beispielsweise in Form von Erhebungen und Vertiefungen.

Der Flanschring ist an dem Rastring festgelegt, vorzugsweise randseitig. Er stützt sich ferner in Axialrichtung auf dem Grundkörper ab, so dass sich ein stabiles und verdrehsicher ausgebildetes Drehlager für den Griff ergibt. Die auf dem Flanschrand des Flanschrings ausgebildete Stirnfläche kann hierbei bündig mit einem Randabschnitt des Rastrings ausgebildet sein, so dass der mit den Klemmscheiben in dem Anschlagkörper axial fixierte Griff eine stets optimale und stabile Unterstützung auf dem Flanschring und dem Rastring findet. Gleichzeitig werden der Rastring, der Flanschring und das Abdeckelement axial auf dem Grundkörper gesichert, so dass einerseits eine kompakte Baueinheit entsteht und sich andererseits eine dauerhaft zuverlässige Lagerung des Griffs auf dem Anschlagkörper ergibt.

Damit auch das Abdeck-Unterteil nicht verloren geht, solange der Anschlagkörper bzw. die Griffanordnung nicht an einer Tür oder einem Fenster angeschlagen ist, sind der Grundkörper und das Abdeck-Unterteil miteinander verrastbar. Beide lassen sich damit vor der Montage des Anschlagkörpers fest miteinander verbinden und gemeinsam an der Tür oder an dem Fenster anbringen. Um das Abdeck-Unterteil an dem Grundkörper festzulegen, ist beispielsweise eine Rastverbindung vorgesehen. Diese hat ein erstes Rastelement, z.B. in Form eines Domes, der am Abdeck-Unterteil ausgebildet ist, und ein zweites Rastelement, z.B. in Form einer Öffnung oder Aussparung, die im Grundkörper eingebracht ist. Steckt man den Dorn in die jeweils zugeordnete Öffnung ein, ist das Abdeck-Unterteil an dem Grundkörper festgelegt. Dieser liegt mit seiner Unterseite bevorzugt flach auf dem Boden des Abdeck-Unterteils auf.

Eine weitere wichtige Ausführungsform der Erfindung sieht vor, dass der Grundkörper eine im Wesentlichen flach ausgebildete Platte ist. Dadurch lässt sich die gesamte Bauhöhe des Anschlagkörpers auf ein Minimum reduzieren und auf dem Türblatt oder dem Profilrahmen des Fensters liegt sichtbar nur noch die flache Anordnung aus Abdeckelement und Abdeck-Unterteil auf, die in der ersten Drehstellung des Abdeckelements eine in sich geschlossene Abdeckung für den Anschlagkörper bilden.

Für ein flaches Erscheinungsbild des Anschlagkörpers trägt auch die Verwendung von Flachkopfschrauben bei. Damit diese bündig mit dem Grundkörper abschließen können, ist in jedem Durchgangsloch des Grundkörpers eine Absenkung für die Aufnahme eines Schraubenkopfes ausgebildet.

Um eine Verdrehsicherung des Anschlagkörpers auf dem Türblatt oder dem Rahmenprofil des Fensters zu gewährleisten, ist weiter vorgesehen, dass auf der dem Grundkörper abgewandten Rückseite des Abdeck-Unterteils nockenähnliche Vorsprünge ausgebildet sind. Diese greifen beim Aufsetzen des Anschlagkörpers auf die Tür oder das Fenster in die darin eingebrachten Bohrungen für die Befestigungsschrauben ein.

Konstruktiv ist es günstig, wenn das Abdeckelement und das Abdeck-Unterteil bezogen auf den Mittelpunkt der zentrischen Ausnehmung im Grundkörper punktsymmetrisch ausgebildet sind. Dies vereinfacht nicht nur die Werkzeuggestaltung für die bevorzugt aus einem Kunststoffmaterial gefertigten Bauteile. Auch die Herstellkosten werden deutlich reduziert.

Mit Vorteil ist der Anschlagkörper Bestandteil einer Griffanordnung, deren Griff axialfest-drehbar auf dem Anschlagkörper gelagert ist. Eine solche Griffanordnung wird mittels des Anschlagkörpers an einer Tür oder einem Fenster angeschlagen, wobei für den Zugang zu den Befestigungsschrauben bzw. zu den dafür vorgesehenen Durchgangslöchern, das Abdeckelement seitlich verschwenkt werden kann. Durch diese seitliche Verschwenkbarkeit des Abdeckelements gegenüber dem Grundkörper und dem Abdeck-Unterteil, benötigt man keinen Spalt mehr zwischen Griff und Abdeckkappe für eine Feder oder für Rastelemente. Man muss das Abdeckelement auch nicht mehr mit einer Feder belasten, um es sauber und bündig auf dem Grundkörper aufliegen zu lassen. Durch die sich ergänzende Ausgestaltung von Abdeckelement und Abdeck-Unterteil ergibt sich - bei montierter Griffanordnung und in der ersten Drehstellung des Abdeckelements - ein in sich geschlossenes Gehäuse, das den Grundkörper rundum abdeckt. Dadurch kann man - unabhängig von dem Abdeckelement und dem Abdeck-Unterteil - für den Grundkörper ein stabiles und robustes Material wählen, denn auf das Erscheinungsbild des Grundkörpers kommt es nicht mehr an, weil diese nicht mehr von außen sichtbar ist. Dennoch kann die Abdeckkappe wie gewohnt jederzeit zur Seite geschwenkt werden, um an die Befestigungsschrauben zu kommen. Ist der Anschlagkörper montiert und befindet sich das Anschlagelement in seiner ersten geschlossenen Drehstellung, ist der Grundkörper optimal verdeckt, so dass sich ein stets schönes und ansprechendes Erscheinungsbild des Griffs bzw. der Griffanordnung ergibt. Es liegt optisch nur noch ein in sich geschlossenes Abdeckelement auf dem Türblatt oder dem Rahmenprofil auf, deren Bauhöhe auf ein Minimum reduziert ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Querschnittsansicht einer Griffanordnung mit einem Anschlagkörper und einem darin drehbar gelagerten Griff;
- Fig. 2: eine Explosionsdarstellung des Anschlagkörpers von Fig. 1;
- Fig. 3: eine Anschlagplatte mit abgehobenem Rastring;
- Fig. 4: eine Querschnittsansicht des Anschlagkörpers von Fig. 1;
- Fig. 5: den Anschlagkörper von Fig. 1 mit ausgeschwenkter Abdeckplatte;
- Fig. 6: eine Draufsicht und eine Seitenansicht der Griffanordnung von Fig. 1 mit ausgeschwenkter Abdeckplatte; und
- Fig. 7: eine Draufsicht und eine Seitenansicht der Griffanordnung von Fig. 1 mit eingeschwenkter Abdeckplatte.

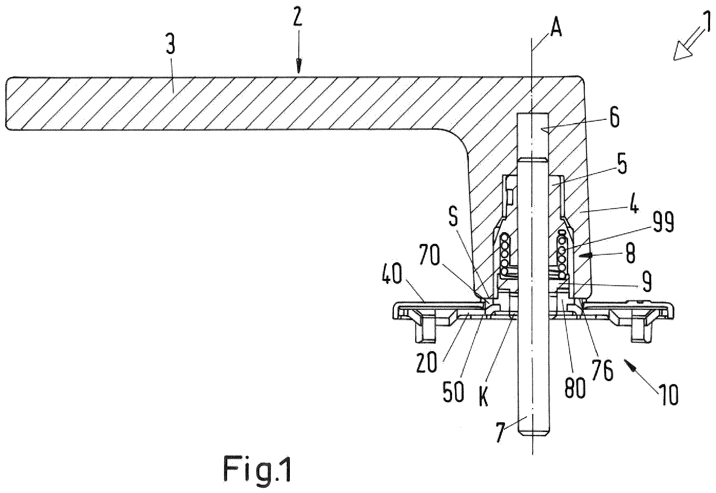

Die in Fig. 1 allgemein mit 1 bezeichnete Griffanordnung ist für die Betätigung einer Tür oder eines Fensters vorgesehen. Sie hat einen Griff 2 und einen Anschlagkörper 10, wobei der Griff 2 axialfest-drehbar auf dem Anschlagkörper 10 gelagert ist. Letzterer wird mittels (nicht gezeigter) Befestigungsschrauben an der Tür oder an dem Fenster befestigt.

Der Griff 2 hat einen Griffhauptteil 3 und einen Griffhals 4, in den ein buchsenförmiger Einsatz 5 axial und drehfest eingesetzt ist. Wie in Fig. 1 zu erkennen, schließt der buchsenförmige Einsatz 5 stirnseitig im Wesentlichen bündig mit der Stirnfläche S des Griffhalses 4 ab. In dem buchsenförmigen Einsatz 5 und dem Griffhals 4 ist ein konzentrisch zur Drehachse A des Griffs 2 liegendes Vierkantloch 6 ausgebildet, in das ein Mitnehmer bzw. ein Mitnehmerstift 7 eingreift, um ein (nicht dargestelltes) Riegel- oder Schlossgetriebe in der Tür oder im Fenster zu betätigen. In dem buchsenförmigen Einsatz 5 ist ferner eine axial wirkende Rastvorrichtung 8 mit einem Gegenrastring 9 und einer Druckfeder 99 ausgebildet, die im Zusammenwirken mit einem Rastring 80 auf dem Anschlagkörper 10 den Griff 2 in ausgezeichneten Drehstellungen relativ zum Anschlagkörper 10 arretiert.

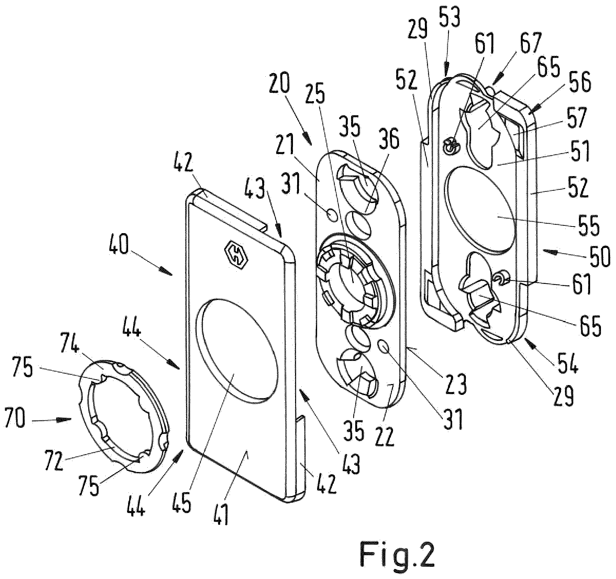

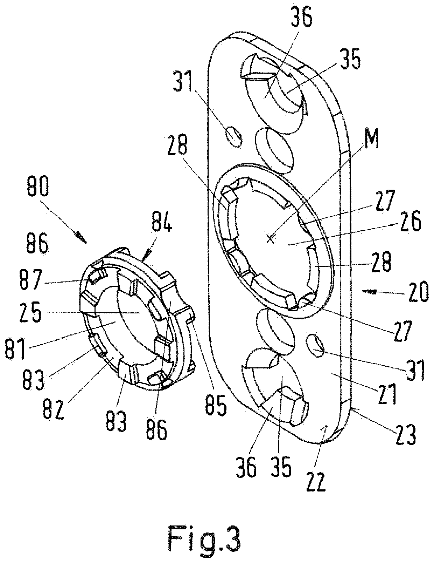

Der Anschlagkörper 10 hat - wie die Fig. 2 bis 4 näher zeigen - einen Grundkörper 20, der zentrisch zur Drehachse A des Griffs 2 eine Ausnehmung 26 aufweist. Diese dient der drehfesten Aufnahme des Rastrings 80 sowie zur Durchführung des Mitnehmerstifts 7, so dass dieser durch den Rastring 80 hindurch in das Riegel- oder Schlossgetriebe in der Tür oder im Fenster eingreifen kann. Für die Aufnahme der (nicht gezeigten) Befestigungsschrauben, die bevorzugt Flachkopfschrauben sind, hat der Grundkörper 20 zwei Durchgangslöcher 35, die - bezogen auf die Längsachse L des Grundkörpers 20 und auf die Drehachse A des Griffs 2 - symmetrisch zur Ausnehmung 26 im Grundkörper 20 liegen. Letzterer ist bevorzugt als flache Platte 21 ausgebildet, die eine Oberseite 22 und eine Unterseite 23 aufweist.

In dem Ausführungsbeispiel der Fig. 2 bis 4 hat der Rastring 80 eine zentrische Öffnung 25 für den Mitnehmerstift 7, wobei die Öffnung 25 von einer zylindrischen Innenwandung 81 begrenzt ist. Auf der dem Griff 2 und einem Gegenrastring 9 der Rastvorrichtung 8 zugewandten Stirnseite 82 trägt der Rastring 80 mehrere, vorzugsweise vier oder acht, Rastvorsprünge 83, die in äquidistanten Winkelabständen über den Umfang verteilt angeordnet sind. Auf der gegenüberliegenden, dem Griff 2 abgewandten Stirnseite 84 sind an dem Rastring 80 vier axiale Vorsprünge 85 ausgebildet, die jeweils an ihrem Außenumfang mit einer Vertiefung 86 versehen sind. Mit diesen axialen Vorsprüngen 85 greift der Rastring 80 in die zentrische Ausnehmung 26 in der Platte 21 des Grundkörper 20 ein, die an ihrem Innenumfang jeweils im Bereich der axialen Vorsprünge 85 mit zu den Vertiefungen 86 gegengleichen, radial vorspringenden Nasen 27 versehen ist. Auf diese Weise sitzt der Rastring 80 stets drehfest in der Platte 21, d.h. zwischen dem Rastring 80 und dem Grundkörper 20 ist mit den Nasen 27 und den Vertiefungen 86 eine Verdrehsicherung ausgebildet. Insoweit bilden die axialen Vorsprünge 85 und die radialen Nasen 27 Passelemente, die beim Einsetzen des Rastrings 80 in den Grundkörper 20 formschlüssig ineinander greifen und auf diese Weise den Rastring im Umfangsrichtung festlegen.

Am Innenumfang der Ausnehmung 26 sind ferner radiale Vorsprünge 28 ausgebildet, die nach dem Einsetzen des Rastrings 80 in die Platte 21 radial zwischen den axialen Vorsprünge 85 des Rastrings 80 liegen. Auf diese Weise wird der Rastring 80 von den radialen Vorsprüngen 28 getragen, d.h. er wird von dem Grundkörper 20 unterstützt. Er kann somit nicht durch die Platte 21 durchrutschen und ist stets verdrehsicher gehalten.

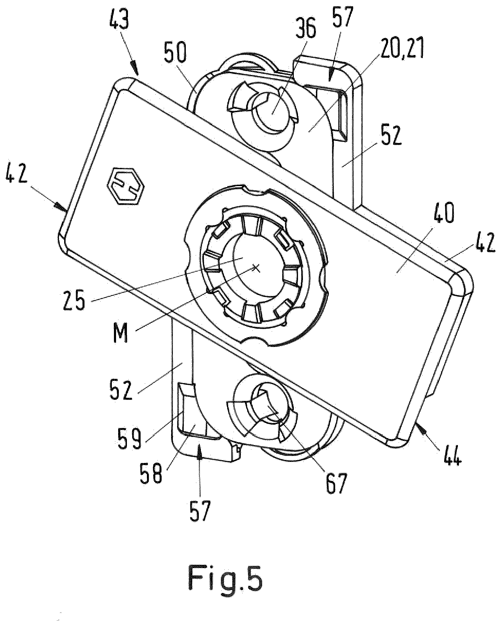

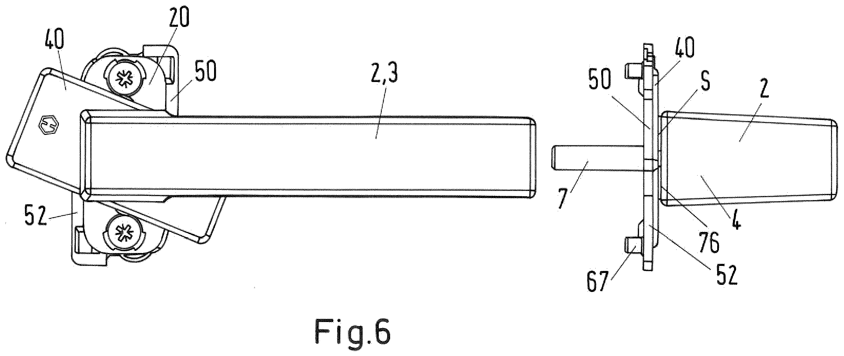

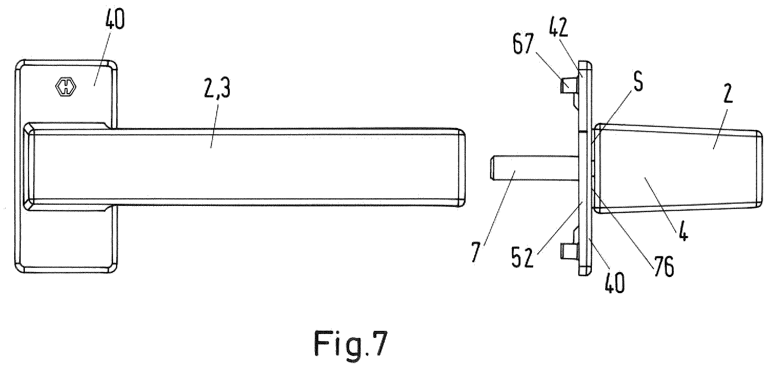

Über dem Grundkörper 20 liegt ein Abdeckelement 40, das drehbar auf der Oberseite 22 der Platte 21 angeordnet ist und in einer ersten Drehstellung relativ zum Grundkörper 20 diesen abdeckt (siehe dazu auch Fig. 7). In einer zweiten Drehstellung relativ zum Grundkörper 20 gibt das Abdeckelement 40 die Durchgangslöcher 35 frei, so dass der Anschlagkörper 10 mit den Befestigungsschrauben montiert werden kann - oder die Schrauben können für eine Demontage ungehindert gelöst werden (siehe dazu Fig. 5 und 6).

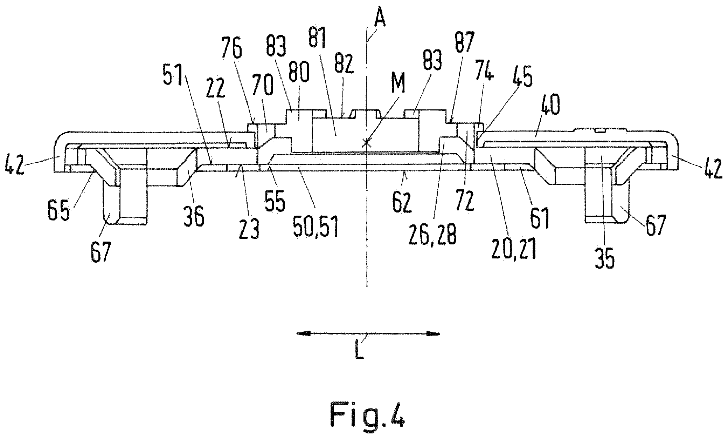

Das Abdeckelement 40 liegt flach auf der Platte 21 auf und ist konzentrisch zur Ausnehmung 26 des Grundkörpers 20 mit einer zentrischen Öffnung 45 versehen. Es wird mit einem Flanschring 70 auf dem Grundkörper 20 drehbar gelagert. Der Flanschring 70 hat hierzu bevorzugt einen Ringabschnitt 72, der - wie Fig.4 zeigt - sich in axialer Richtung auf dem Grundkörper 20 abstützt und die Öffnung 45 im Abdeckelement 40 durchragt. Er umschließt hierbei den Rastring 80 und ist mittels Passelementen 75 drehfest mit diesem verbunden. Dazu sind am Innenumfang des Flanschrings 70 - wie Fig. 2 näher zeigt - radial vorspringende Nasen 75 vorgesehen, die gegengleich zu den Vertiefungen 86 in den axialen Vorsprüngen 85 des Rastrings 80 ausgebildet sind, d.h. die Nasen 75 des Flanschrings 70 und die Vertiefungen 86 des Rastrings 80 bilden auch hier Passelemente für eine Verdrehsicherung. Auf diese Weise kann das Abdeckelement 40 stets ungehindert und relativ zum Grundkörper 20 seitlich verschwenkt werden.

Um das Abdeckelement 40 axial zu sichern, weist der Flanschring 70 einen Flanschrand 74 auf, der im Bereich der Öffnung 45 im Abdeckelement 40 auf dessen Oberseite 41 aufliegt. Der Flanschrand 74 des Flanschrings 70 hat hierbei bevorzugt eine ebene Stirnfläche 76, wobei der Griffhals 4 bei montiertem Griff 2 mit seiner Stirnfläche S auf der Stirnfläche 76 des Flanschrings 70 gleitend aufliegt. Die Axialfestlegung des Griffs 2 an dem Anschlagkörper 10 erfolgt beispielsweise mit einem Klemmelement K, das fest auf den Mitnehmerstift 7 aufgesetzt, vorzugsweise aufgepresst ist. Das Klemmelement K steht hierbei kraft- und/oder reibschlüssig mit den Seitenwandungen des Mitnehmerstifts 7 im Eingriff und stützt sich auf der Unterseite 23 des Grundkörpers 20 ab. Auf diese Weise wird der Griff 2 mit seiner Stirnfläche S gegen die Stirnfläche 76 des Flanschrings 70 gezogen, wobei der Griffhals 4 bündig und stabil auf dem Flanschrand 74 aufliegt. Dadurch ist der Griff 2 dauerhaft stabil und präzise auf dem Anschlagkörper 10 gelagert. Die Stirnfläche S des Griffhalses 4 und die Stirnfläche 76 des Flanschring 70 bilden dabei ein Gleitlager für den Griff 2, der sich leichtgängig und präzise um seine Drehachse A drehen lässt. Man erkennt, dass zwischen dem Griffhals 4 und dem Abdeckelement 40 nur noch der Flanschrand 74 des Flanschrings 70 liegt, so dass der Spalt zwischen Griff 2 und Abdeckelement 40 auf ein Minimum reduziert und von außen kaum sichtbar ist. Um die Festigkeit der Griffanordnung 1, insbesondere die Verbindung zwischen Griff 2 und Anschlagkörper 10 zu erhöhen, können - wie in Fig. 1 gezeigt - zwei Klemmscheiben K verwendet werden.

Zur Stabilisierung der Drehlagerung des Griffs 2 trägt auch bei, wenn der Rastring 80 randseitig einen Umlaufrand 87 aufweist, der - wie Fig. 4 zeigt - stufenförmig von der Stirnseite 82 abgesetzt ist und bündig mit der Stirnfläche 76 des Flanschrings 70 abschließt. Auf diese Weise ergibt sich für den Griffhals 4 und den darin vorzugsweise bündig eingesetzten buchsenförmigen Einsatz 5 eine vergrößerte Stütz- und Lagerfläche, wobei die Stirnfläche S des Griffhalses 4 auf dem der Stirnfläche 76 und dem Umlaufrand 87 aufliegt.

Auf der Unterseite 23 der Platte 21 des Grundkörpers 20 ist ein Abdeck-Unterteil 50 ausgebildet, wobei das Abdeckelement 40 und das Abdeck-Unterteil 50 in der ersten Drehstellung des Abdeckelements 40 den Grundkörper 20 gemeinsam umschließen.

Das Abdeck-Unterteil 50 hat einen Boden 51, in dem konzentrisch zur Ausnehmung 26 des Grundkörpers 20 eine Öffnung 55 ausgebildet ist. Der Durchmesser der Öffnung 55 ist vorzugsweise größer als der Außendurchmesser der Klemmscheiben K, so dass sich diese ungehindert auf der Unterseite 23 des Grundkörpers 20 abstützten können. Im Bereich der Durchgangslöcher 35 des Grundkörpers 20 sind im Boden 51 des Abdeck-Unterteils 50 Durchgangslöcher 65 ausgebildet, so dass der Grundkörper 20 mit den Befestigungsschrauben an der Tür bzw. dem Fenster befestigt werden kann. Der Grundkörper 20 liegt flach auf dem Boden 51 des Abdeck-Unterteils 50 auf, wodurch sich eine stabile Anordnung ergibt.

Um den Grundkörper 20 auch seitlich einschließen, d.h. optisch abdecken bzw. verdecken zu können, bilden das Abdeckelement 40 und das Abdeck-Unterteil 50 einen gemeinsamen umlaufenden Rand 42, 52, der die Platte 21 seitlich umgibt. Hierzu hat das Abdeckelement 40 einen den Grundkörper 20 seitlich abdeckenden Rand 42, der in einander gegenüberliegenden Bereichen 43, 44 unterbrochen ist. In diesen Bereichen 43, 44 hat das Abdeck-Unterteil 50 einen den Grundkörper 20 seitlich abdeckenden Rand 52, der gleichfalls in einander gegenüberliegenden Bereichen 53, 54 unterbrochen ist, namentlich dort, wo der Rand 42 des Abdeckelements 40 ausgebildet ist. Dadurch ergänzen sich der Rand 42 des Abdeckelements 40 und der Rand 52 des Abdeck-Unterteils 50 in der ersten Drehstellung des Abdeckelements 40 relativ zum Grundkörper 20 zu einem optisch geschlossenen Rand, der den Grundkörper seitlich umlaufend verdeckt.

Aufgrund der Teilung des Randes 42, 52 ist es allerdings jederzeit möglich, das Abdeckelement 40 relativ zum Grundkörper 20 und relativ zum Abdeck-Unterteil 50 in einer Ebene seitlich zu verdrehen, um die Befestigungsschrauben bzw. die Durchgangslöcher 35 freizulegen. Ein Anheben oder Abheben des Abdeckelements 40 ist dabei nicht notwendig. Auch zusätzliche oder gesonderte Federelemente, welche das Abdeckelement 40 gegen den Grundkörper 20 drücken, sind nicht mehr notwendig, denn das Abdeckelement 40 wird über den Flanschring 70 stets sicher und drehbar gehalten.

Man erkennt, dass das Abdeckelement 40 und das Abdeck-Unterteil 50 eine Art Gehäuse für den Grundkörper 20 bilden, das in der ersten Drehstellung des Abdeckelements 40 in sich geschlossen ist und den Grundkörper 20 von allen Seiten abdeckt, das aber zugleich durch eine einfache Drehbewegung in einer Ebene geöffnet werden kann, um den Grundkörper montieren oder demontieren zu können. Das Abdeckelement 40 bildet dabei eine Art Schwenkdeckel für das Gehäuse, während das Abdeck-Unterteil 50, das in montierter Stellung des Anschlagkörpers 10 zwischen dem Grundkörper 20 und der Tür oder dem Fenster angeordnet ist, den Gehäuseboden bildet. Die Ränder 42, 52 ergänzen sich in Schließstellung zu Seitenwänden, welche den Grundkörper 20 seitlich abdecken. In der Öffnungsstellung bilden die Endkanten der Ränder 42 des Abdeckelements 40 - wie in Fig. 5 gezeigt - Anschläge für die Drehbewegung, so dass das Abdeckelement 40 nur bis zu einem bestimmten Winkel verdreht bzw. geöffnet werden kann. Die Längen der jeweiligen Ränder 42, 52 an dem Abdeckelement 40 und dem Abdeck-Unterteil 50 sind derart aufeinander abgestimmt, dass sich beim Drehen des Abdeckelements 40 ein für das Freilegen der Befestigungsschrauben oder der Durchgangslöcher 35 ausreichend großer Öffnungswinkel ergibt, und dass der Rand 42, 52 in der ersten Drehstellung des Abdeckelements 40 zumindest optisch in sich geschlossen wirkt.

Damit sich das Abdeckelement 40 während des Gebrauchs des Griffs 2 durch dessen Drehbewegung nicht versehentlich öffnen bzw. verdrehen kann, stehen das Abdeckelement 40 und das Abdeck-Unterteil 50 in der ersten Drehstellung des Abdeckelements 40 kraft-, reib- und/oder formschlüssig miteinander in Verbindung. Dazu ist beispielsweise in den Eckbereichen 56 der Ränder 52 des Abdeck-Unterelement 50 je eine Schikane 57 ausgebildet, welche das Abdeckelement 40 in der ersten Drehstellung in Position hält. Hierzu ist im Eckebereich 56 jeweils eine Erhebung 58 ausgebildet, die randseitig mit flach ansteigenden Flanken 59 als Anlaufschrägen versehen ist. Beim Drehen des Abdeckelements 40 von der zweiten Drehstellung in die erste Drehstellung wird das Abdeckelement 40 randseitig leicht angehoben, wobei die Erhebung 58 entweder reibschlüssig mit dem Abdeckelement 40 in Kontakt steht. Oder das Abdeckelement 40 weist auf seiner Unterseite eine korrespondierende (nicht gezeigte) Aussparung auf, in welche die Erhebung 58 einrastet. Das Abdeckelement 40 selbst wirkt hier als Federelement.

Damit das Abdeck-Unterteil 50 nicht verloren geht, solange die Griffanordnung 2 nicht an der Tür oder am Fenster angeschlagen ist, sind der Grundkörper 20 und das Abdeck-Unterteil 50 miteinander verrastbar. Hierzu sind an dem Abdeck-Unterteil 50 zwei Dome 61 angebracht, die in zwei Bohrungen 31 der Platte 21 klemmen bzw. verrastet werden.

Darüber hinaus kann das Abdeck-Unterteil 50 mit umlaufenden Randabschnitten 29 versehen sein, die den Grundkörper 20 seitlich und formangepasst umgeben. Die Breite der Randabschnitt 29 ist schmaler als die Breite der Ränder 52, so dass das Abdeckelement 40 mit seinen Rändern 42 weiterhin vollständig in die erste Drehstellung gelangen kann. In dieser Drehstellung liegen die Randabschnitt 29 hinter den Rändern 42 des Abdeckelements 40.

Damit die Befestigungsschrauben bündig mit der Oberseite 22 der Platte 21 abschließen, bildet jede Durchgangsöffnung 35 des Grundkörpers 20 eine Absenkung 36 für die Aufnahme eines Schraubenkopfes. Um überdies eine Verdrehsicherung für den Anschlagkörper 10 auf einem Türblatt oder auf einem Rahmenprofil zu schaffen, sind auf der der dem Grundkörper 20 abgewandten Rückseite 62 des Abdeck-Unterteils 50 nockenähnliche Vorsprünge 67 ausgebildet sind. Man erkennt, dass die Absenkungen 36 in der Platte 21 und die Nockenförmigen Vorsprünge 67 im Abdeck-Unterteil 50 sich gegenseitig ergänzen.

Bevorzugt sind das Abdeckelement 40 und das Abdeck-Unterteil 50 bezogen auf den Mittelpunkt M der Ausnehmung 26 im Grundkörper 20 punktsymmetrisch ausgebildet. Dies vereinfacht sowohl die Herstellung der Elemente 40, 50 und auch deren Handhabung und Montage.

Die Erfindung ist nicht auf eine der vorbeschriebenen Ausführungsformen beschränkt, sondern in vielfältiger Weise abwandelbar. So kann man beispielsweise bei einer Griffanordnung 1, die keine Verrastung des Griffs 2 in ausgezeichneten Funktionsstellungen vorsieht oder deren Rastvorrichtung 8 an einer anderen Stelle im Griff 2 oder im Anschlagkörper 10 ausgebildet ist, den Flanschring 70 direkt mit der Platte 21 in Eingriff bringen, um eine Verdrehsicherung des Flanschrings 70 zu gewährleisten. Während die Absenkungen 36 der Platte 21 durch den Boden 51 des Abdeck-Unterteils 50 hindurch ragen, können diese auch flacher ausgebildet sein, so dass der Boden 51 des Abdeck-Unterteils 50 nicht durchbrochen wird. In diesem Fall könnte man auch auf die nockenähnlichen Vorsprünge 67 verzichten. Das Abdeckelement 40 und das Abdeck-Unterteil 50 sind bevorzugt aus dem gleichen Material gefertigt. Für axiale Festlegung des Griffs 2 am Anschlagkörper 10 können anstelle der Klemmscheiben K auch andere Klemm- und Fixierelemente verwendet werden, z.B. Zackenringe oder Sprengringe, die in geeigneter Weise mit dem Mitnehmerstift 7 oder dem Griff in Eingriff stehen.

Man erkennt, dass ein Anschlagkörper 10 für Tür- und/oder Fenstergriffe, einen Grundkörper 20 hat, der zur Aufnahme eines Rastrings 80 eine Ausnehmung 26 und zur Aufnahme von Befestigungsschrauben wenigstens zwei Durchgangslöcher 35 aufweist, wobei der Grundkörper 20 eine Oberseite 22 und eine Unterseite 23 aufweist. Der Anschlagkörper 10 hat ferner ein Abdeckelement 40, das drehbar auf der Oberseite 22 des Grundkörpers 20 angeordnet ist und in einer ersten Drehstellung relativ zum Grundkörper 20 diesen abdeckt und in einer zweiten Drehstellung relativ zum Grundkörper 20 die Durchgangslöcher 35 freigibt. Um hohen ästhetischen Ansprüchen gerecht zu werden, insbesondere um zu verhindern, dass Teile der Unterkonstruktion, insbesondere des Grundkörpers 20 nach außen hin sichtbar sind, ist vorgesehen, dass auf der Unterseite 23 der Grundplatte 20 ein Abdeck-Unterteil 50 angeordnet ist, wobei das Abdeckelement 40 und das Abdeck-Unterteil 50 in der ersten Drehstellung des Abdeckelements 40 den Grundkörper 20 umschließen. Das Abdeckelement 40 und das Abdeck-Unterteil 50 haben jeweils einen abschnittsweise umlaufenden Rand 42, 52, wobei sich die Ränder 42, 52 in der ersten Drehstellung des Abdeckelements 40 relativ zum Grundkörper 20 zu einem optisch geschlossenen Rand ergänzen, der den Grundkörper 20 seitlich abdeckt. Das Abdeckelement 40 ist um einen Flanschring 70 drehbar gelagert, wobei der Flanschring 70 mit einem Flanschrand 74 auf der Oberseite 41 des Abdeckelements 40 aufliegt. Zur Verdrehsicherung des Flanschrings 70 sind Passelemente 27, 75, 85 vorgesehen, wobei der Flanschring 70 den Rastring 80 umschließt, der wiederum mittels der Passelemente 27, 85 auf dem Grundkörper 20 verdrehsicher abgestützt ist.

**Bezugszeichenliste**

| | | | |
|---|---|---|---|
| A | Drehachse | 43 | Bereich |
| K | Klemmelement | 44 | Bereich |
| L | Längsachse | 45 | Öffnung |
| M | Mittelpunkt | 50 | Abdeck-Unterteil |
| S | Stirnfläche | 51 | Boden |
| | | 52 | Rand |
| 1 | Griffanordnung | 53 | Bereich |
| 2 | Griff | 54 | Bereich |
| 3 | Griffhauptteil | 55 | Öffnung |
| 4 | Griffhals | 56 | Eckbereich |
| 5 | buchsenförmiger Einsatz | 57 | Schikane |
| 6 | Vierkantloch | 58 | Erhebung |
| 7 | Mitnehmerstift | 59 | Flanke |
| 8 | Rastvorrichtung | 61 | Dorn |
| 9 | Gegenrastring | 62 | Rückseite |
| 10 | Anschlagkörper | 65 | Durchgangslöcher |
| 20 | Grundkörper | 67 | nockenähnlicher Vorsprung |
| 21 | Platte | 70 | Flanschring |
| 22 | Oberseite | 72 | Ringabschnitt |
| 23 | Unterseite | 74 | Flanschrand |
| 25 | zentrische Öffnung | 75 | Nase |
| 26 | Ausnehmung | 76 | Stirnfläche |
| 27 | Nase | 80 | Rastring |
| 28 | radialer Vorsprung | 81 | Innenwandung |
| 29 | Randabschnitt | 82 | Stirnseite |
| 31 | Bohrung | 83 | Rastvorsprung |
| 35 | Durchgangsöffnung | 84 | gegenüberliegende Stirnseite |
| 36 | Absenkung | 85 | axialer Vorsprung |
| 40 | Abdeckelement | 86 | Vertiefung |
| 41 | Oberseite | 87 | Umlaufrand |
| 42 | Rand | | |

## Patentansprüche

1. Anschlagkörper (10) für Tür- und/oder Fenstergriffe, mit einem Grundkörper (20), der eine zentrisch angeordnete Ausnehmung (26) und zur Aufnahme von Befestigungsschrauben wenigstens zwei Durchgangslöcher (35) aufweist, wobei der Grundkörper (20) eine Oberseite (22) und eine Unterseite (23) aufweist, und mit einem Abdeckelement (40), das drehbar auf der Oberseite (22) des Grundkörpers (20) angeordnet ist und in einer ersten Drehstellung relativ zum Grundkörper (20) diesen abdeckt und in einer zweiten Drehstellung relativ zum Grundkörper (20) die Durchgangslöcher (35) freigibt, wobei auf der Unterseite (23) des Grundkörpers (20) ein Abdeck-Unterteil (50) angeordnet ist, wobei das Abdeckelement (40) und das Abdeck-Unterteil (50) in der ersten Drehstellung des Abdeckelements (40) den Grundkörper (20) umschließen, **dadurch gekennzeichnet, dass** das Abdeckelement (40) einen den Grundkörper (20) seitlich abdeckenden Rand (42) aufweist, der in einander gegenüberliegenden Bereichen (43, 44) unterbrochen ist.

2. Anschlagkörper nach Anspruch 1, **dadurch gekennzeichnet, dass** das Abdeckelement (40) konzentrisch zur Ausnehmung (26) des Grundkörpers (20) eine Öffnung (45) aufweist.

3. Anschlagkörper nach einem der Ansprüche 1 oder 2, **dadurch gekennzeichnet, dass** das Abdeck-Unterteil (50) einen den Grundkörper (20) seitlich abdeckenden Rand (52) aufweist, der in einander gegenüberliegenden Bereichen (53, 54) unterbrochen ist.

4. Anschlagkörper nach Anspruch 3, **dadurch gekennzeichnet, dass** sich der Rand (42) des Abdeckelements (40) und der Rand (52) des Abdeck-Unterteils (50) in der ersten Drehstellung des Abdeckelements (40) relativ zum Grundkörper (20) zu einem optisch geschlossenen Rand ergänzen.

5. Anschlagkörper nach einem der Ansprüche 1 bis 4, **dadurch gekennzeichnet, dass** das Abdeck-Unterteil (50) einen Boden (51) aufweist, in dem konzentrisch zur Ausnehmung (26) des Grundkörpers (20) eine Öffnung (55) ausgebildet ist, und in dem im Bereich der Durchgangslöcher (35) des Grundkörpers (20) Durchgangslöcher (65) ausgebildet sind.

6. Anschlagkörper nach einem der Ansprüche 1 bis 5, **dadurch gekennzeichnet, dass** das Abdeckelement (40) und das Abdeck-Unterteil (50) in der ersten Drehstellung des Abdeckelements (40) kraft-, reib- und/oder formschlüssig miteinander in Verbindung stehen.

7. Anschlagkörper nach einem der Ansprüche 1 bis 6, **dadurch gekennzeichnet, dass** das Abdeckelement (40) mittels eines Flanschrings (70) drehbar auf dem Grundkörper (20) gesichert ist, wobei der Flanschring (70) einen Flanschrand (74) aufweist, der im Bereich der Öffnung (45) im Abdeckelement (40) auf dessen Oberseite (41) aufliegt.

8. Anschlagkörper nach Anspruch 7, **dadurch gekennzeichnet, dass** der Flanschrand (74) des Flanschrings (70) eine ebene Stirnfläche (76) hat, wobei die Stirnfläche (76) eine Lagerfläche für den Griff (2) bildet.

9. Anschlagkörper nach Anspruch 7 oder 8, **dadurch gekennzeichnet, dass** in dem Grundkörper (20) ein Rastring (80) eingesetzt ist, wobei der Flanschring (70) an dem Rastring (80) festgelegt ist.

10. Anschlagkörper nach einem der Ansprüche 1 bis 9, **dadurch gekennzeichnet, dass** der Grundkörper (20) und das Abdeck-Unterteil (50) miteinander verrastbar sind.

11. Anschlagkörper nach einem der Ansprüche 1 bis 10, **dadurch gekennzeichnet, dass** der Grundkörper (20) eine im Wesentlichen flach ausgebildete Platte (21) ist.

12. Anschlagkörper nach einem der Ansprüche 1 bis 11, **dadurch gekennzeichnet, dass** jede Durchgangsöffnung (35) des Grundkörpers (20) eine Absenkung (36) für die Aufnahme eines Schraubenkopfes bildet.

13. Anschlagkörper nach einem der Ansprüche 1 bis 12, **dadurch gekennzeichnet, dass** auf der der dem Grundkörper (20) abgewandten Rückseite (62) des Abdeck-Unterteils (50) nockenähnliche Vorsprünge (67) ausgebildet sind.

14. Anschlagkörper nach einem der Ansprüche 1 bis 13, **dadurch gekennzeichnet, dass** das Abdeckelement (40) und das Abdeck-Unterteil (50) bezogen auf den Mittelpunkt (M) der Ausnehmung (26) des Grundkörpers (20) punktsymmetrisch ausgebildet sind.

15. Griffanordnung (1) mit einem Griff (2) und einem Anschlagkörper (10) nach einem der Ansprüche 1 bis 14, wobei der Griff (2) axialfest-drehbar in dem Anschlagkörper (10) gelagert ist.

## Claims

1. Escutcheon (10) for door and/or window handles having a basic body (20) which has a centrally disposed recess (26) and for the reception of fastening screws at least two through holes (35), wherein the basic body (20) has a top side (22) and a bottom side (23), and having a cover element (40), which is rotatably disposed on the top side (22) of the basic body (20) and in a first rotational position relative to the basic body (20) covers it and in a second rotational position relative to the basic body (20) exposes the through holes (35), wherein on the bottom side (23) of the basic body (20) is disposed a cover bottom part (50), wherein the cover element (40) and the cover bottom part (50) in the first rotational position of the cover element (40) enclose the basic body (20), **characterised in that** the cover element (40) has a border (42) which covers laterally the basic body (20), which border is interrupted in regions (43, 44) opposite to one another.

2. Escutcheon according to claim 1, **characterised in that** cover element (40) has an opening (45) concentrically to the recess (26) of the basic body (20).

3. Escutcheon according to any of claims 1 or 2, **characterised in that** the cover bottom part (50) has a border (52) covering laterally the basic body (20), which border is interrupted in regions (53, 54) opposite to one another.

4. Escutcheon according to claim 3, **characterised in that** the border (42) of the cover element (40) and the border (52) of the cover bottom part (50) in the first rotational position of the cover element (40) relative to the basic body (20) complement one another to form an optically closed border.

5. Escutcheon according to any of claims 1 to 4, **characterised in that** the cover bottom part (50) has a floor (51) in which concentrically to the recess (26) of the basic body (20) is formed an opening (55), and in which in the region of the through holes (35) of the basic body (20) are formed through holes (65).

6. Escutcheon according to any of claims 1 to 5, **characterised in that** the cover element (40) and the cover bottom part (50) in the first rotational position of the cover element (40) are connected with one another force-fittingly, friction-fittingly and/or form-fittingly.

7. Escutcheon according to any of claims 1 to 6, **characterised in that** the cover element (40) is secured rotatably on the basic body (20) by means of a flange ring (70), wherein the flange ring (70) has a flange border (74), which in the region of the opening (45) in the cover element (40) lies on its top side (41).

8. Escutcheon according to claim 7, **characterised in that** the flange border (74) of the flange ring (70) has a flat front face (76), wherein the front face (76) forms a support surface for the handle (2).

9. Escutcheon according to claim 7 or 8, **characterised in that** in the basic body (20) is set a locking ring (80), wherein the flange ring (70) is fixed on the locking ring (80).

10. Escutcheon according to any of claims 1 to 9, **characterised in that** the basic body (20) and the cover bottom part (50) can be locked with one another.

11. Escutcheon according to any of claims 1 to 10, **characterised in that** the basic body (20) is a substantially planar formed plate (21).

12. Escutcheon according to any of claims 1 to 11, **characterised in that** each through opening (35) of the basic body (20) forms a depression (36) for the reception of a screw head.

13. Escutcheon according to any of claims 1 to 12, **characterised in that** on the back side (62), facing away from the basic body (20), of the cover bottom part (50) are formed cam-like projections (67).

14. Escutcheon according to any of claims 1 to 13, **characterised in that** the cover element (40) and the cover bottom part (50) are formed point-symmetrically with respect to the mid-point (M) of the recess (26) of the basic body (20).

15. Handle arrangement (1) having a handle (2) and an escutcheon (10) according to any of claims 1 to 14, wherein the handle (2) is supported axially-fixed rotatably in the escutcheon (10).

## Revendications

1. Corps de montage (10) pour poignées de porte et/ou de fenêtre, comprenant un corps de base (20) qui présente une cavité agencée au centre (26) et au moins deux trous de passage (35) pour recevoir des vis de fixation, dans lequel le corps de base (20) présente une face supérieure (22) et une face inférieure (23), et un élément de recouvrement (40) qui est agencé à rotation sur la face supérieure (22) du corps de base (20) et recouvre celui-ci dans une première position de rotation par rapport au corps de base (20) et libère les trous de passage (35) dans une seconde position par rapport au corps de base (20), dans lequel est agencée sur la face inférieure (23) du corps de base (20) une face inférieure de recouvrement (50), dans lequel l'élément de recouvrement (40) et la face inférieure de recouvrement (50) enserrent le corps de base (20) dans la première position de rotation de l'élément de recouvrement (40), **caractérisé en ce que** l'élément de recouvrement (40) présente un bord (42) recouvrant latéralement le corps de base (20), qui est interrompu dans des zones en regard l'une de l'autre (43, 44).

2. Corps de montage selon la revendication 1, **caractérisé en ce que** l'élément de recouvrement (40) présente une ouverture (45) concentriquement à la cavité (26) du corps de base (20).

3. Corps de montage selon l'une quelconque des revendications 1 ou 2, **caractérisé en ce que** la face inférieure de recouvrement (50) présente un bord (52) recouvrant latéralement le corps de base (20), qui est interrompu dans des zones en regard l'une de l'autre (53, 54).

4. Corps de montage selon la revendication 3, **caractérisé en ce que** le bord (42) de l'élément de recouvrement (40) et le bord (52) de la face inférieure de recouvrement (50) complètent, dans la première position de rotation de l'élément de recouvrement (40), un bord optiquement fermé par rapport au corps de base (20).

5. Corps de montage selon l'une quelconque des revendications 1 à 4, **caractérisé en ce que** la face inférieure de recouvrement (50) présente un fond (51) dans lequel est conçue, concentriquement à la cavité (26) du corps de base (20), une ouverture (55) et dans lequel des trous de passage (65) sont formés dans la zone des trous de passage (35) du corps de base (20).

6. Corps de montage selon l'une quelconque des revendications 1 à 5, **caractérisé en ce que** l'élément de recouvrement (40) et la face inférieure de recouvrement (50) sont en liaison l'une avec l'autre dans la première position de rotation de l'élément de recouvrement (40) par adhérence, par entraînement par friction et/ou par voie mécanique.

7. Corps de montage selon l'une quelconque des revendications 1 à 6, **caractérisé en ce que** l'élément de recouvrement (40) est fixé à rotation sur le corps de base (20) au moyen d'un collet rapporté (70), dans lequel le collet rapporté (70) présente un bord bridé (74) qui s'appuie dans la zone de l'ouverture (45) de l'élément de recouvrement (40) sur sa face inférieure (41).

8. Corps de montage selon la revendication 7, **caractérisé en ce que** le bord bridé (74) du collet rapporté (70) a une surface avant plane (76), dans lequel la surface avant (76) forme une surface d'appui pour la poignée (2).

9. Corps de montage selon la revendication 7 ou 8, **caractérisé en ce que** l'on insère dans le corps de base (20) un anneau d'arrêt (80), dans lequel le collet rapporté (70) est fixé sur l'anneau d'arrêt (80).

10. Corps de montage selon l'une quelconque des revendications 1 à 9, **caractérisé en ce que** le corps de base (20) et la face inférieure de recouvrement (50) peuvent être enclenchés l'un dans l'autre.

11. Corps de montage selon l'une quelconque des revendications 1 à 10, **caractérisé en ce que** le corps de base (20) est une plaque (21) de forme sensiblement plate.

12. Corps de montage selon l'une quelconque des revendications 1 à 11, **caractérisé en ce que** chaque ouverture de passage (35) du corps de base (20) forme un logement (36) pour la réception d'une tête de vis.

13. Corps de montage selon l'une quelconque des revendications 1 à 12, **caractérisé en ce que** des saillies (67) similaires à des cames sont formées sur la face arrière (62) de la face inférieure de recouvrement (50) opposée au corps de base (20).

14. Corps de montage selon l'une quelconque des revendications 1 à 13, **caractérisé en ce que** l'élément de recouvrement (40) et la face inférieure de recouvrement (50) sont formés en symétrie ponctuelle par rapport au point central (M) de la cavité (26) du corps de base (20).

15. Agencement de poignée (1) avec une poignée (2) et un corps de montage (10) selon l'une quelconque des revendications 1 à 14, dans lequel la poignée (2) est montée à rotation axialement solidaire dans le corps de montage (10).
